# EUROPÄISCHE PATENTSCHRIFT

(11) **EP 2 583 918 B1**
(45) Veröffentlichungstag und Bekanntmachung des Hinweises auf die Patenterteilung: **12.11.2014**
(21) Anmeldenummer: 12183254.7
(22) Anmeldetag: 06.09.2012
(51) Int. Cl.: B65G 43/02

(54) **Stahlseil-Fördergurt mit einer mittels elektromagnetischer Induktion eingebauten Leiterschleife sowie Verfahren zum Einbau der Leiterschleife**
Steel cable conveyor with a conducting loop built in using electromagnetic induction and method for integrating the conducting loop
Courroie de transport à câble en acier dotée d'une boucle conductrice intégrée par induction électromagnétique et procédé d'intégration de la boucle conductrice

(30) Priorität: 18.10.2011 DE 102011054561
(43) Veröffentlichungstag der Anmeldung: 24.04.2013
(73) Patentinhaber: Phoenix Conveyor Belt Systems GmbH, 07422 Bad Blankenburg (DE)
(72) Erfinder: Küsel, Bernd, 21077 Hamburg (DE)
(74) Vertreter: Finger, Karsten

(56) Entgegenhaltungen:
- EP-A1- 1 873 088
- EP-B1- 0 008 806
- DE-A1- 3 347 570
- DE-A1-102006 044 110
- DE-C1- 19 612 521

## Beschreibung

Die Erfindung betrifft einen Fördergurt mit einer tragseitigen und laufseitigen Deckplatte aus jeweils einer vulkanisierten Kautschukmischung sowie mit einem eingebetteten Zugträger in Form von in Fördergurtlängsrichtung parallel verlaufenden Stahlseilen, wobei die tragseitige und/oder laufseitige Deckplatte mit wenigstens einer Leiterschleife ausgestattet ist/sind. Die Erfindung betrifft ferner ein Verfahren zum Einbau der Leiterschleife.

Die tragseitige und laufseitige Deckplatte eines Fördergurtes bestehen aus einer Kautschukmischung, enthaltend eine Kautschukkomponente oder einen Kautschukkomponentenverschnitt, ein Vernetzungsmittel oder ein Vernetzungssystem, umfassend ein Vernetzungsmittel und einen Beschleuniger, sowie zumeist weitere Mischungsingredienzien, insbesondere einen Füllstoff und/oder ein Verarbeitungshilfsmittel und/oder ein Alterungsschutzmittel und/oder einen Weichmacher und/oder sonstige Zusatzstoffe (z.B. Fasern, Farbpigmente). Die diesbezügliche Kautschukbasis ist insbesondere:
Naturkautschuk (NR)
Butadien-Kautschuk (BR)
Chloropren-Kautschuk (CR)
Styrol-Butadien-Kautschuk (SBR)
Nitrilkautschuk (NBR)
Butylkautschuk (IIR)
Ethylen-Propylen-Kautschuk (EPM)
Ethylen-Propylen-Dien-Kautschuk (EPDM)
SBR/NR-Verschnitt
SBR/BR-Verschnitt
NR/BR-Verschnitt

Von besonderer Bedeutung ist bislang CR, das sich durch eine hohe Flamm-, Witterungs- und Alterungsbeständigkeit auszeichnet, insbesondere für Fördergurte mit Einsatz im Untertagebergbau. Im Übertagebergbau haben ferner NR sowie die oben erwähnten Verschnitte (DE 10 2009 043 904 A1) eine größere Bedeutung erlangt.

Bedingt durch die Vulkanisation einer Kautschukmischung der oben genannten Art erhält der Fördergurt die erforderlichen elastischen Eigenschaften.

Bei Stahlseil-Fördergurten wird zumeist zwecks Schlitzschutz zusätzlich eine in der tragseitigen und/oder laufseitigen Deckplatte eingebettete Querarmierung verwendet (WO 2008/034483 A1). Die Querarmierung kann aus einem Synthesecord, beispielsweise aus Polyamid, oder einem Metallcord gebildet sein.

In die tragseitige und/oder laufseitige Deckplattes des Fördergurtes ist vollständig wenigstens eine Leiterschleife eingebettet. Sie ist eine endlos verbundene (kurzgeschlossene) Schleife. Zumeist sind in einem Fördergurt in einem Abstand von 50 bis 200 m, insbesondere 50 bis 100 m, mehrere Leiterschleifen eingebettet, und zwar als Einzelleiterschleifen oder Leiterschleifenpaket.

Hinsichtlich der Leiterschleifen-Technologie wird insbesondere auf folgende Patentliteratur verwiesen:
DE 15 56 723 A1
DE 40 14 475 A1
DE 44 44 264 C1
DE 196 07 867 A1
DE 198 27 120 A1
DE 198 31 854 A1
DE 101 00 249 A1
EP 0 213 057 A1
EP 1 097 094 B1
WO 2005/030621 A1
WO 2010/133387 A1
AU 57 558 B
GB 1 246 786 A
US 4 621 727

Im Folgenden wird auf die Fördergurt-Leiterschleifen-Technologie näher eingegangen.

Die Leiterschleife hat die Aufgabe, das Auftreten von Längsschlitzen erkennbar zu machen. Die Leiterschleife wird dabei mit Hilfe einer Abfragestation in Form eines Sender/Empfänger-Paares auf Unversehrtheit überprüft. Beim Auftreten eines Längsschlitzes im Fördergurt wird auch die Leiterschleife zerstört und die Übertragungsstrecke Sender/Empfänger wird unterbrochen. Damit erhält man ein Kriterium, um einen Fördergurt zu Beginn des Schlitzvorganges zu stoppen und die Länge des Schlitzes zu begrenzen. Die maximal mögliche Länge des Schlitzes wird dadurch auf den Abstand zweier Leiterschleifen plus den Bremsweg begrenzt. Leider kommt es nach längerem Einsatz der Fördergurte immer häufiger zu Fehlalarmen, die dadurch ausgelöst werden, dass die Leiterschleife zerstört wurde, ohne dass ein Gurtschlitz aufgetreten ist.

Die Leiterschleife besteht häufig aus mäanderförmig eingebauten Metallcorden, insbesondere aus Stahlcorden. Die Corde bestehen wiederum zumeist aus wenigstens fünf Litzen. Bevorzugt wird dabei ein Cordaufbau des Typs 7X7 mit einem Einzeldrahtdurchmesser von etwa 0,2 mm und einem Gesamtdurchmesser von 1,5 mm bis 2 mm. Es gibt auch Varianten, die aus einem gemischten Aufbau von Kupferlitzen und Stahllitzen bestehen, wobei insbesondere die Stahllitzen die Kupferlitzen umhüllen. Auch eine Version, bestehend aus einem massiven, von Stahllitzen umhüllten Kupferdraht, ist bekannt.

Der mäanderförmige Aufbau (DE 196 07 867 A1, Fig. 1) ist besonders dazu geeignet, um die Dehnungsfähigkeit der Leiterschleife zu erhöhen, da sie sonst durch die mechanische Beanspruchung im Fördergurt, nämlich Biege- und Beaufschlagungsbeanspruchung, nach relativ kurzer Zeit zerstört werden würden. Das Herstellen der Mäander erfordert den Einsatz eines relativ duktilen Materials, was sich jedoch negativ auf die Lebensdauer der Leiterschleife auswirkt. Werkstoffe mit höherer Elastizität verbessern zwar die Dauerfestigkeit des Einzelcordes erheblich, erschweren es aber, diesen Mäander zu formen. Auch die Verwendung so genannter "High Elongation"-Corde (HE-Corde), die durch ihren Aufbau dehnungsfähiger sind als die Corde, verbessert die Lebensdauer, erschwert aber ebenfalls das Ausformen der Mäander.

In der Offenlegungsschrift DE 101 00 249 A1 wird eine Leiterschleife vorgestellt, die innerhalb des Randbereiches des Fördergurtes eine höhere Cordmasse aufweist als im Mittenbereich des Fördergurtes. Die Leiterschleife ist dabei ferner frei von Kreuzungspunkten, und zwar im Gegensatz zu der 8-förmigen Leiterschleife, wie sie in der Offenlegungsschrift EP 0 213 057 A1 beschrieben wird. Mit einer derartigen Konstruktion ist es möglich, eine höhere elektromagnetische Empfindlichkeit zu erzielen.

Die Offenlegungsschrift WO 2005/030621 A1 geht auf eine neuere Leiterschleifen-Entwicklung ein. Dabei wird zwecks Bereitstellung einer hochflexiblen und hochdehnfähigen Leiterschleife mit erhöhter Lebensdauer vorgeschlagen, die Leiterschleife als offene Litzenhelix auszubilden, wobei jeder Einzeldraht von einem polymeren Werkstoff mit elastischen Eigenschaften umflossen ist. Durch diese Maßnahme wird zudem die interne Reibung zwischen den Drähten unterbunden.

Die Leiterschleifen nach dem hier näher ausgeführten Stand der Technik, wonach die Leiterschleifen-Corde zumeist aus Stahl bestehen, ist ihre Korrosionsanfälligkeit, ihre geringe Flexibilität, trotz der Maßnahmen gemäß WO 2005/030621 A1, ihre geringe Dehnbarkeit und letztlich die anfällige Verbindung im Rahmen der Endlosschließung.

In der Offenlegungsschrift WO 2010/133387 A1 wird nun zwecks Erhöhung der Flexibilität bei gleichzeitiger Werkstoffbeständigkeit eine Leiterschleife vorgestellt, die aus wenigstens einem Hybridfaden gebildet ist. Der Hybridfaden wiederum besteht zumindest aus einem textilen ersten Werkstoff und einem leitfähigen zweiten Werkstoff.

Der textile erste Werkstoff ist vorzugsweise ein Polyamid (PA), Aramid, Polyester (PES), Polyvinylacetal (PVA), Polyimid (PI), Polyetheretherketon (PEEK) oder ein Polyphenylen. Aus der Gruppe der Polyphenylene ist dabei insbesondere ein Polyphenylensulfid (PPS) von Bedeutung.

Der leitfähige zweite Werkstoff ist insbesondere ein korrosionsbeständiges Metall. Von besonderer Bedeutung ist ein Edelmetall, insbesondere in Form von Silber, insbesondere wiederum als reines Silber.

Der textile erste Werkstoff bildet zumeist den Kern und der leitfähige zweite Werkstoff den Mantel des Hybridfadens. Die Ummantelung erfolgt dabei galvanisch oder elektrochemisch.

Zumeist bilden wenigstens zwei Hybridfäden einen Fadenverbund, und zwar in Form eines Cordes oder Zwirns. Der Fadenverbund weist dabei eine Stärke von 0,5 mm bis 2 mm auf.

Hinsichtlich der Thematik um die Hybrid-Leiterschleife wird ergänzend insbesondere noch auf die beiden Offenlegungsschriften DE 15 56 723 A1 und GB 1 246 786 A verwiesen.

Im Folgenden wird auf eine Leiterschleifenproblematik näher eingegangen.

Der Nachteil der Leiterschleifen ist, dass sie im Allgemeinen nur einen Bruchteil der Standzeit von Stahlseil-Fördergurten erreichen. Nach einem Erfahrungswert sind dies zwei Jahre, wobei es je nach Beanspruchung aber auch wenige Monate oder mehrere Jahre sein können. Nach dieser Zeit haben die Leiterschleifen durch die vielen Biegewechsel durch Gurtmuldung, Trommelumlauf und durch die Beaufschlagung mit Fördermaterial Ermüdungsbrüche, so dass die Leitfähigkeit sinkt oder der Stromkreis unterbrochen wird, wobei es zu Fehlalarmen kommt. Damit sind unnötige Stillstandzeiten verbunden.

Eine Reparatur der in die tragseitige und/oder laufseitige Deckplatte einvulkanisierten Leiterschleife ist nicht möglich. Sie muss stattdessen herausgeschnitten werden. Dann wird in die gleiche Stelle eine in noch unvulkanisierter Kautschukmischung eingebettete Leiterschleife in die Deckplatte konfektioniert und unter der Einwirkung von Druck und Temperatur vulkanisiert. Dabei muss das Auswechseln der Leiterschleife möglichst schnell gehen, um die Materialförderung nicht zu lange zu behindern.

Die Aufgabe der Erfindung besteht nun darin, beim Einbau der Leiterschleife, insbesondere bei Austausch einer defekten Leiterschleife, die Vulkanisationszeit und Vulkanisationsqualität zu verbessern.

Gelöst wird diese Aufgabe dadurch, dass die Leiterschleife entsprechend Anspruch 1 eingebaut ist.

Die elektromagnetische Induktion unter Wärmebildung wird auch als Induktionsheizen bezeichnet, was in Verbindung mit dem Verfahren noch näher erläutert wird.

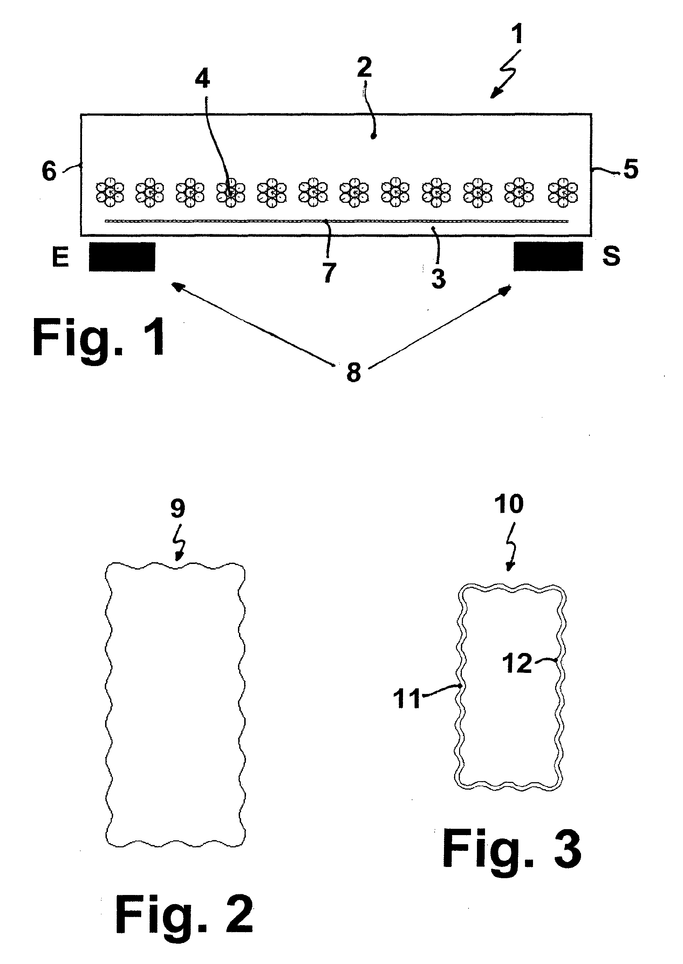

Im Zusammenhang mit diesem Lösungsmerkmal sind folgende Gestaltungsvarianten der Leiterschleife vorteilhaft:
- Die Leiterschleife besteht aus Stahl oder einer Metalllegierung, beispielsweise eine Stahl-Kupfer-Legierung, insbesondere unter dem Aspekt der Korrosionsbeständigkeit.
- Die Leiterschleife ist eine Hybrid-Leiterschleife, umfassend einen textilen und metallischen Werkstoff, wobei der metallische Werkstoff wiederum korrosionsbeständig sein sollte. Von besonderer Bedeutung ist dabei eine Hybrid-Leiterschleife, gebildet aus einem Polyamid und Silber.
- Die Leiterschleife ist als Leiterschleifenpaket eingebaut. Ein diesbezügliches Ausführungsbeispiel wird in Verbindung mit der Fig. 3 noch näher vorgestellt.

Eine weitere Aufgabe der Erfindung besteht darin, ein Verfahren zum Einbau einer Leiterschleife, insbesondere bei Austausch einer defekten Leiterschleife, bereitzustellen, das die Vulkanisationszeit und Vulkanisationsqualität verbessert.

Gelöst wird diese Aufgabe durch wenigstens folgende Verfahrensschritte:
- in eine Aussparung der tragseitigen und/oder laufseitigen Deckplatte wird ein der Aussparung angepasstes Formteil aus einer vulkanisierbaren Kautschukmischung, in das die Leiterschleife vollständig eingebettet ist, eingelegt;
- mittels elektromagnetischer Induktion unter Wärmebildung wird das eingelegte Formteil vulkanisiert, und zwar unter Ausbildung eines Haftverbundes mit dem Deckplattenmaterial.

Das Formteil liegt häufig in Streifenform vor.

Der Mechanismus des Induktionsheizens arbeitet mittels alternierender magnetischer Felder, die einen massiven Körper, hier den Fördergurt, durchdringen, um ihn zu erwärmen. Die induzierten Wirbelströme führen zu einer Erwärmung des massiven Körpers. Das wechselnde Magnetfeld wird mit Hilfe einer Induktionsspule, die mit Niedrigfrequenz-Strom gespeist wird, erzeugt. Generell ist dabei die Erwärmung durch Induktionsheizen nur für Stahlseil-Fördergurte möglich.

Im Gegensatz zu konventionellen Erwärmungsmethoden wird bei der Induktion der Fördergurt von Innen über die Seile beheizt. Dabei ist eine Temperaturkontrolle wichtig, um ein Überheizen zu vermeiden.

Außerdem ist ein ausreichender Zufluss eines alternierenden Magnetfeldes im Innern des Fördergurtes Voraussetzung für eine ausreichende Erwärmung.

Im Zusammenhang mit dem vorgenannten Verfahren sind folgende Verfahrensparameter vorteilhaft:
- Die elektromagnetische Induktion wird so durchgeführt, dass eine Temperatur von 130 bis 180 °C, insbesondere 145 bis 160 °C, entsteht. Zumeist beträgt die Temperatur etwa 150 °C.
- Die Leiterschleife wird beim Einbau mittels einer Presse unter Druck gesetzt. Der Druck der Presse beträgt dabei 0,8 bis 1,2 MPa (Megapascal). Zumeist beträgt der Druck etwa 1 MPa. Die Presse kann beheizt oder unbeheizt sein, da die Leiterschleife bzw. das Leiterschleifenpaket relativ dünn ist.

Die Erfindung wird nun anhand von Ausführungsbeispielen unter Bezugnahme auf schematische Zeichnungen erläutert. Es zeigen:
- Fig. 1: einen Fördergurt mit einer Leiterschleife;
- Fig. 2: eine Leiterschleife als Einzelleiterschleife;
- Fig. 3: eine Leiterschleife in Form eines Leiterschleifenpakets;
- Fig. 4: den Einbau einer Leiterschleife mittels elektromagnetischer Induktion.

Fig. 1 zeigt einen Fördergurt 1, der eine tragseitige Deckplatte 2 und eine laufseitige Deckplatte 3 aus jeweils einer vulkanisierten Kautschukmischung, beispielsweise auf der Basis von CR. Zwischen diesen beiden Deckplatten ist ein Zugträger 4 in Form von Stahlseilen eingebettet.

Von Fördergurtkante 5 zu Fördergurtkante 6 erstreckt sich nun innerhalb der laufseitigen Deckplatte 3 eine Leiterschleife 7. Diese Leiterschleife kommuniziert berührungslos mit einer Abfragestation 8 in Form eines Sender S/Empfänger E-Paares.

Fig. 2 zeigt eine Leiterschleife 9 als Einzelleiterschleife. Es liegt also nur ein einziger Stromkreis vor.

Fig. 3 zeigt eine Leiterschleife 10 in Form eines Leiterschleifenpakets, gebildet aus einer äußeren Leiterschleife 11 und einer inneren Leiterschleife 12. Ein Leiterschleifenpaket mit wenigstens zwei Stromkreisen wird bevorzugt eingesetzt.

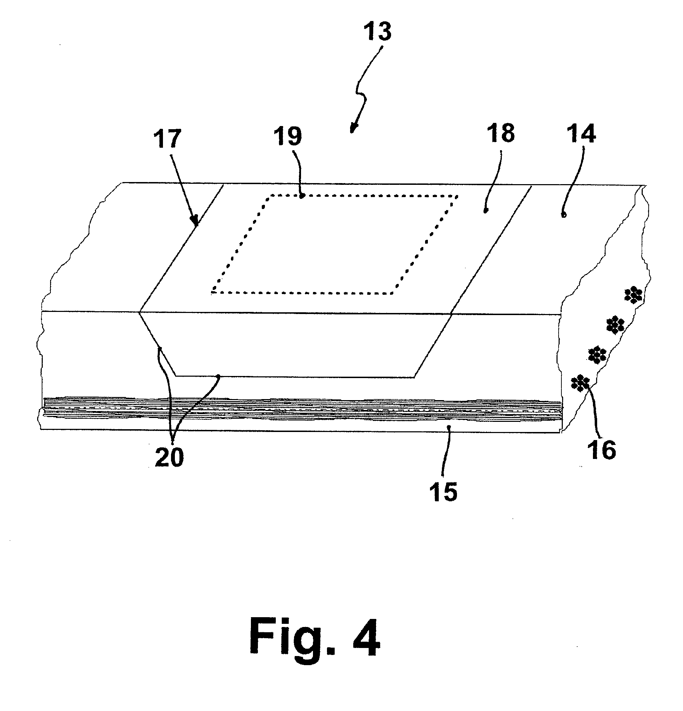

Fig. 4 zeigt einen Fördergurt 13 mit einer tragseitigen Deckplatte 14 und laufseitigen Deckplatte 15 sowie mit einem eingebetteten Zugträger 16 in Form von Stahlseilen. Nachdem eine defekte Leiterschleife zusammen mit der umgebenden vulkanisierten Kautschukmischung mit einem entsprechenden Gerät herausgeschnitten wurde, bildet sich zunächst eine Aussparung 17, und zwar hier innerhalb der tragseitigen Deckplatte 14. In diese Aussparung wird dann ein angepasstes Formteil 18 aus einer vulkanisierbaren Kautschukmischung, in das die Leiterschleife 19 vollständig eingebettetet ist, eingelegt. Besteht dabei das Deckplattenmaterial aus einer Kautschukmischung auf der Basis von CR, so wird zumeist für das Formteil die gleiche oder eine ähnliche Werkstoffbasis gewählt.

Mittels Induktionsheizen wird eine Wärme erzeugt, insbesondere um etwa 150 °C, so dass eine Vulkanisation stattfindet, wobei sich an der Kontaktzone 20 von dem eingelegten Formteil 18 mit integrierter Leiterschleife 19 und der tragseitigen Deckplatte 14 ein dauerwirksamer Haftverbund mit dem Deckplattenmaterial bildet. Die ausgetauschte Leiterschleife 19 kann dann nach einer kurzen Austauschphase ihre Funktion wieder aufnehmen.

### Bezugszeichenliste

### (Teil der Beschreibung)

- 1: Fördergurt
- 2: tragseitige Deckplatte
- 3: laufseitige Deckplatte
- 4: Zugträger
- 5: Fördergurtkante
- 6: Fördergurtkante
- 7: Leiterschleife
- 8: Abfragestation in Form eines Sender/Empfänger-Paares
- 9: Leiterschleife als Einzelleiterschleife
- 10: Leiterschleife in Form eines Leiterschleifenpakets
- 11: äußere Leiterschleife
- 12: innere Leiterschleife
- 13: Fördergurt
- 14: tragseitige Deckplatte
- 15: laufseitige Deckplatte
- 16: Zugträger
- 17: Aussparung
- 18: Formteil
- 19: Leiterschleife
- 20: Kontaktzone
- E: Empfänger
- S: Sender

## Patentansprüche

1. Fördergurt (1, 13) mit einer tragseitigen Deckplatte (2, 14) und laufseitigen Deckplatte (3, 15) aus jeweils einer vulkanisierten Kautschukmischung sowie mit einem eingebetteten Zugträger (4, 16) in Form von in Fördergurtlängsrichtung parallel verlaufenden Stahlseilen, wobei die tragseitige und/oder laufseitige Deckplatte mit wenigstens einer Leiterschleife (7, 9, 10, 11, 12, 19) ausgestattet ist/sind, **dadurch gekennzeichnet, dass** die Leiterschleife (7, 9, 10, 11, 12, 19) vollständig in einem Formteil (18) aus einer vulkanisierbaren Kautschukmischung eingebettet ist, welches mittels elektromagnetischer Induktion unter Ausbildung eines Haftverbundes in eine Aussparung des Deckplattenmaterials einvulkanisiert ist.

2. Fördergurt nach Anspruch 1, **dadurch gekennzeichnet, dass** die Leiterschleife (7, 9, 10 , 11, 12, 19) aus Stahl oder einer Metalllegierung besteht.

3. Fördergurt nach Anspruch 1, **dadurch gekennzeichnet, dass** die Leiterschleife (7, 9, 10, 11, 12, 19) eine Hybrid-Leiterschleife ist, umfassend einen textilen und metallischen Werkstoff.

4. Fördergurt nach einem der Ansprüche 1 bis 3, **dadurch gekennzeichnet, dass** die Leiterschleife (10, 11, 12) als Leiterschleifenpaket eingebaut ist.

5. Verfahren zum Einbau einer Leiterschleife (7, 9, 10, 11, 12, 19) als Bauteil eines Fördergurtes (1, 13) mit einer tragseitigen Deckplatte (2, 14) und laufseitigen Deckplatte (3, 15) aus jeweils einer vulkanisierten Kautschukmischung sowie mit einem eingebetteten Zugträger (4, 16) in Form von in Fördergurtlängsrichtung verlaufenden Stahlseilen, wobei die tragseitige und/oder laufseitige Deckplatte mit der Leiterschleife (7, 9, 10, 11, 12, 19) ausgestattet ist/sind, **gekennzeichnet durch** wenigstens folgende Verfahrensschritte:
- in eine Aussparung (17) der tragseitigen Deckplatte (2, 14) und/oder laufseitigen Deckplatte (3, 15) wird ein der Aussparung angepasstes Formteil (18) aus einer vulkanisierbaren Kautschukmischung, in das die Leiterschleife (7, 9, 10, 11, 12, 19) vollständig eingebettet ist, eingelegt;
- mittels elektromagnetischer Induktion unter Wärmebildung wird das eingelegte Formteil (18) vulkanisiert, und zwar unter Ausbildung eines Haftverbundes mit dem Deckplattenmaterial.

6. Verfahren nach Anspruch 5, **dadurch gekennzeichnet, dass** die elektromagnetische Induktion so durchgeführt wird, dass eine Temperatur von 130 bis 180 °C entsteht.

7. Verfahren nach Anspruch 6, **dadurch gekennzeichnet, dass** die elektromagnetische Induktion so durch geführt wird, dass eine Temperatur von 145 bis 160 °C entsteht.

8. Verfahren nach einem der Ansprüche 5 bis 7, **dadurch gekennzeichnet, dass** die Leiterschleife (7, 9, 10, 11, 12, 19) beim Einbau mittels einer Presse unter Druck gesetzt wird.

9. Verfahren nach Anspruch 8, **dadurch gekennzeichnet, dass** der Druck der Presse 0,8 bis 1,2 MPa beträgt.

10. Verfahren nach Anspruch 8 oder 9, **dadurch gekennzeichnet, dass** die Presse unbeheizt ist oder beheizt wird.

## Claims

1. Conveyor belt (1, 13) having a support-side outer sheet (2, 14) and a running-side outer sheet (3, 15), each made of a vulcanized rubber composition, and having an embedded tension member (4, 16) in the form of steel cords running parallel in the longitudinal direction of the conveyor belt, the support-side outer sheet and/or the running-side outer sheet being provided with at least one conductor loop (7, 9, 10, 11, 12, 19), **characterized in that** the conductor loop (7, 9, 10, 11, 12, 19) is completely embedded in a moulded part (18) made of a vulcanizable rubber composition, which is vulcanized into a recess in the outer sheet material by means of electromagnetic induction while forming an adhesive bond.

2. Conveyor belt according to Claim 1, **characterized in that** the conductor loop (7, 9, 10, 11, 12, 19) consists of steel or a metal alloy.

3. Conveyor belt according to Claim 1, **characterized in that** the conductor loop (7, 9, 10, 11, 12, 19) is a hybrid conductor loop, comprising textile and metallic material.

4. Conveyor belt according to one of Claims 1 to 3, **characterized in that** the conductor loop (10, 11, 12) is integrated as a conductor loop package.

5. Method for integrating a conductor loop (7, 9, 10, 11, 12, 19) as a component of a conveyor belt (1, 13) having a support-side outer sheet (2, 14) and a running-side outer sheet (3, 15), each made of a vulcanized rubber composition, and having an embedded tension member (4, 16) in the form of steel cords running parallel in the longitudinal direction of the conveyor belt, the support-side outer sheet and/or the running-side outer sheet being provided with the conductor loop (7, 9, 10, 11, 12, 19), **characterized by** the following method steps:
- placed into a recess (17) in the support-side outer sheet (2, 14) and/or running-side outer sheet (3, 15) is a moulded part (18) made of a vulcanizable rubber composition, which is adapted to the recess and in which the conductor loop (7, 9, 10, 11, 12, 19) is completely embedded;
- the placed-in moulded part (18) is vulcanized by means of electromagnetic induction while forming heat, to be precise while forming an adhesive bond with the outer sheet material.

6. Method according to Claim 5, **characterized in that** the electromagnetic induction is carried out in such a way that a temperature of 130 to 180°C is produced.

7. Method according to Claim 6, **characterized in that** the electromagnetic induction is carried out in such a way that a temperature of 145 to 160°C is produced.

8. Method according to one of Claims 5 to 7, **characterized in that**, when it is integrated, the conductor loop (7, 9, 10, 11, 12, 19) is put under pressure by means of a press.

9. Method according to Claim 8, **characterized in that** the pressure of the press is 0.8 to 1.2 MPa.

10. Method according to Claim 8 or 9, **characterized in that** the press is unheated or is heated.

## Revendications

1. Courroie de transport (1, 13) comprenant une plaque de recouvrement du côté porteur (2, 14) et une plaque de recouvrement du côté de roulement (3, 15) constituées chacune d'un mélange de caoutchouc vulcanisé, et comprenant un support de traction incorporé (4, 16) en forme de câble d'acier s'étendant parallèlement dans la direction longitudinale de la courroie de transport, la plaque de recouvrement du côté porteur et/ou du côté de roulement étant munie d'au moins une boucle conductrice (7, 9, 10, 11, 12, 19), **caractérisée en ce que** la boucle conductrice (7, 9, 10, 11, 12, 19) est complètement incorporée dans une pièce moulée (18) constituée d'un mélange de caoutchouc vulcanisable, qui est incorporée par vulcanisation au moyen d'une induction électromagnétique en créant une liaison par adhérence dans un évidement du matériau de la plaque de recouvrement.

2. Courroie de transport selon la revendication 1, **caractérisée en ce que** la boucle conductrice (7, 9, 10, 11, 12, 19) se compose d'acier ou d'un alliage de métaux.

3. Courroie de transport selon la revendication 1, **caractérisée en ce que** la boucle conductrice (7, 9, 10, 11, 12, 19) est une boucle conductrice hybride comprenant un matériau textile et un matériau métallique.

4. Courroie de transport selon l'une quelconque des revendications 1 à 3, **caractérisée en ce que** la boucle conductrice (10, 11, 12) est incorporée en tant que paquet de boucles conductrices.

5. Procédé d'incorporation d'une boucle conductrice (7, 9, 10, 11, 12, 19) en tant que composant d'une courroie de transport (1, 13) comprenant une plaque de recouvrement du côté porteur (2, 14) et une plaque de recouvrement du côté de roulement (3, 15) constituées chacune d'un mélange de caoutchouc vulcanisé, et comprenant un support de traction incorporé (4, 16) en forme de câble d'acier s'étendant dans la direction longitudinale de la courroie de transport, la plaque de recouvrement du côté porteur et/ou du côté de roulement étant munie de la boucle conductrice (7, 9, 10, 11, 12, 19), **caractérisé par** au moins les étapes de procédé suivantes :
- dans un évidement (17) de la plaque de recouvrement du côté porteur (2, 14) et/ou de la plaque de recouvrement du côté de roulement (3, 15) est introduite une pièce moulée (18) adaptée à l'évidement, constituée d'un mélange de caoutchouc vulcanisable, dans laquelle la boucle conductrice (7, 9, 10, 11, 12, 19) est complètement incorporée ;
- au moyen d'une induction électromagnétique avec génération de chaleur, la pièce moulée introduite est vulcanisée, et ce en créant une liaison par adhésion avec le matériau de la plaque de recouvrement.

6. Procédé selon la revendication 5, **caractérisé en ce que** l'induction électromagnétique est conduite de telle sorte que l'on ait une température de 130 à 180° C.

7. Procédé selon la revendication 6, **caractérisé en ce que** l'induction électromagnétique est conduite de telle sorte que l'on ait une température de 145 à 160° C.

8. Procédé selon l'une quelconque des revendications 5 à 7, **caractérisé en ce que** la boucle conductrice (7, 9, 10, 11, 12, 19) est mise sous pression lors de son incorporation au moyen d'une presse.

9. Procédé selon la revendication 8, **caractérisé en ce que** la pression de la presse est de 0,8 à 1,2 MPa.

10. Procédé selon la revendication 8 ou 9, **caractérisé en ce que** la presse n'est pas chauffée ou est chauffée.
